# FASCICULE DE BREVET EUROPEEN

(11) **EP 0 545 746 B1**
(45) Date de publication et mention de la délivrance du brevet: **23.04.1997**
(21) Numéro de dépôt: 92402926.7
(22) Date de dépôt: 28.10.1992
(51) Int. Cl.: C01F 17/00, C08K 3/30

(54) **Compositions à base de sulfures de terres rares, préparation et utilisations**
Zusammenstellungen auf Basis von Seltenerdmetallsulfiden, Verfahren zur Herstellung und Verwendung davon
Compositions based on rare earth sulfides, preparation and use thereof

(30) Priorité: 04.12.1991 FR 9114988
(43) Date de publication de la demande: 09.06.1993
(60) Demande divisionnaire: 96115536.3
(73) Titulaire: RHONE-POULENC CHIMIE, 92408 Courbevoie Cédex (FR)
(72) Inventeur: Chopin, Thierry, F-93200 Saint-Denis (FR); Guichon, Hervé, F-93120 La Courneuve (FR); Touret, Olivier, F-93300 Aubervilliers (FR)
(74) Mandataire: Dubruc, Philippe

(56) Documents cités:
- EP-A- 0 203 838
- US-A- 4 545 967
- US-A- 4 765 931
- INT. SOC. OPT. ENG.; PROC. SPIE vol. 683, 1986, pages 72 - 78 K.J. SAUNDERS ET AL. 'Current and future development of calcium lanthanum sulfide.'
- ACTA CRYSTALLOGRAPHYCA vol. 19, 1965, pages 14 - 19 J. FLAHAUT ET AL. 'Phases cubiques type Th3P4 dans les sulfures, les selenures et les tellurures L2X3 et L3X4 des terres rares, etc.'
- MATERIALS RESEARCH BULLETIN vol. 19, no. 9, 1984, pages 1215 - 1220 M. SATO 'Preparation and structure of sodium rare-earth sulfides, NaLnS2 (Ln; Rare earth elements).'
- C. R. ACAD. SCI., SERIE II vol. 307, no. 14, 7 Novembre 1988, PARIS pages 1625 - 1628 P. LEMOINE ET AL. 'Sur des composés isomorphes de formule générale M(I)2M'(III)23,33S36.'
- CHEMICAL ABSTRACTS, vol. 94, no. 4, Janvier 1981, Columbus, Ohio, US; abstract no. 24178 f, H. SETA ET AL. 'Preparation of cerium sesquisulfide.' page 584 ;
- Gmelin Handbook of Inorganic Chemistry, 8th Edition, system number 39, part C7, 'Sc, Y, La-Lu'; Ed. Czack, Springer-Verlag, Berlin, 1983: page 597-605

## Description

La présente invention concerne de nouvelles compositions à base de sulfures de terres rares.
Plus particulièrement, elle concerne des compositions à base de sesquisulfures de terres rares présentant, entre autres, des propriétés chromatiques améliorées.

Dans l'exposé qui suit de la présente invention, on entend par éléments terres rares, les éléments appartenant à la famille des lanthanides ayant un numéro atomique compris entre 57 et 71, ainsi que l'yttrium de numéro atomique 39.

Les sesquisulfures de terres rares, de formule générale M₂S₃ dans laquelle M désigne au moins une terre rare, sont des produits déjà connus en soi et largement décrits dans la littérature.

On sait, entre autre, qu'ils peuvent être utilisés comme pigments de coloration pour différents matériaux, comme par exemple les plastiques, les peintures et autres. Ils trouvent également des applications comme détecteurs de présence de soufre, ou bien encore dans la fabrication des matériaux constituant les fenêtres optiques, tant pour la lumière visible que pour l'infrarouge.

A titre d'exemple, l'utilisation des sesquisulfures de terres rares comme pigments colorés, a déjà été décrite notamment dans la demande de brevet EP-A- 0203838, au nom de la Demanderesse, et dont l'enseignement est inclus ici à titre de référence.

Or, pour cette application particulière, il s'avère que les sesquisulfures de terres rares connus à ce jour présentent des propriétés, notamment chromatiques, encore insuffisantes pour connaître un réel développement.

L'article de K. J. Saunders et al. "Current and Future Development of Calcium Lanthanum Sulphide" SPIE Vol. 683, Infrared and Optical Transmitting Materials 1986 décrit, par ailleurs la préparation de CaLa₂S₄ en vue de son utilisation, après frittage, comme fenêtre infrarouge.
Une autre difficulté réside dans les procédés de synthèse de ce type de produits.
La plupart des procédés visant à l'obtention des sesquisulfures de terres a haute pureté monoplasique, mettent en oeuvre des réactions du type solide-gaz.
On peut ainsi citer la préparation de sulfures de terres rares et d'alcalino-terreux par action d'H₂S,sur des oxydes de terres rares et des carbonates d'alcalino-terreux notamment (Flahaut et al. Acta Cryst. (1965) 19, 14.
L'article de Sato et al. Mat. Res. Bull., Vol. 19 p.p. 1215-1220, 1984 décrit un procédé de préparation de sulfures de terres rares et de sodium par sulfuration avec H₂S. Les produits obtenus présentent une phase majoritaire de structure NaCl.
Le brevet US 4 545 967 concerne la préparation d'un sulfure de lanthane par réaction de poudres de soufre,de lanthane et de l'alcalino-terreux, puis frittage.

En outre, les sulfures peuvent être préparés par action de l'hydrogène sulfureux sur un oxyde de terres rares à haute température ( voir notamment le document EP-A- 0203838 précité ) ou sous haute pression. Il a également été proposé de faire réagir un agent sulfurant tel que le soufre, H₂S et/ou CS₂ sur un composé de terres rares, comme par exemple un oxyde, un carbonate ou un oxalate. De tels procédés sont notamment décrits dans la demande de brevet français FR-A- 2100 551, ou dans l'article de MM. HEINDL et LORIERS paru dans le Bulletin de la Société Chimique de France, 1974, n° 3-3.
Or, toutes les méthodes ci-dessus présentent l'inconvénient d'être peu, voire pas du tout, exploitables à l'échelle industrielle, car elles requièrent soit l'utilisation de H₂S pour obtenir un sesquisulfure de terres rares exempt d'oxysulfure, soit des conditions de température et/ou de pression incompatibles avec une fabrication industrielle. En outre, elles sont d'un contrôle délicat, et l'on évite difficilement la formation parasite, a cote au sesquisulfure de terres rares présentant la phase cristalline désirée, d'un oxysulfure de terres rares. Ainsi, les produits obtenus présentent des coordonnées chromatiques insuffisantes, et, de plus, la couleur originelle du sesquisulfure peut être dégradée par, par exemple, un oxysulfure de terres rares qui ne présente pas la couleur désirée.

La présente invention a pour but de remédier aux inconvénients susmentionnés.

Un premier objet de la présente invention est de proposer de nouvelles compositions à base de sesquisulfure(s) de terre(s) rare(s) présentant, notamment, des caractéristiques chromatiques tout à fait remarquables, et donc convenant tout particulièrement bien pour une utilisation comme pigments de coloration.

Un autre objet de la présente invention est de proposer un procédé de fabrication permettant d'obtenir de telles compositions sous des conditions compatibles avec une exploitation industrielle.

A ces fins, il est maintenant proposé une nouvelle composition à base d'au moins un sesquisulfure de terres rares de formule M₂S₃ dans laquelle M représente au moins un élément pris dans le groupe constitue par les lanthanides et l'yttrium, ladite composition étant caractérisée par le fait qu'elle contient au moins un élément alcalin (élément dopant) dont une partie au moins est incluse dans le réseau cristallin dudit sulfure, et peut être présente flanc les lacunes cationiques de ce réseau, et en ce que le sesquisulfure est cristallisé selon une structure cristallographique du type Th₃P₄ essentiellement.
On notera, d'ores et déjà, que les compositions selon l'invention peuvent contenir un ou plusieurs alcalins.
Aussi, dans ce qui suit, l'expression "élément dopant" a été utilisée par simplicité pour désigner un métal alcalin et elle doit s'entendre comme couvrant toute combinaison entre alcalin(s) comme souligné ci-dessus.

L'élément dopant peut être présent sous différentes formes dans la composition. Toutefois, selon l'invention, il est de préférence essentiellement présent sous une forme combinée avec les sesquisulfures de terres rares. Dans ce cas, l'élément dopant est alors lié de façon irréversible aux sesquisulfures, en ce sens que, par exemple, même des lavages très poussés de ces derniers, ne permettent pas de l'éliminer. De tels lavages peuvent conduire par contre à l'élimination des éventuels sulfures et/ou polysulfures d'alcalin(s) présents à la surface des compositions, et donc non liés de façon irréversible à ces dernières.

Sans vouloir limiter la présente invention à une théorie, on peut avancer l'explication probable suivante :
on sait que les sesquisulfures de terres rares M₂S₃ cristallisent selon une structure cristallographique type Th₃ P₄, qui présente des lacunes au niveau du réseau des cations ; cette structure lacunaire peut être
symbolisée en donnant aux sesquisulfures la formule M_{10,66} [ ]_{1,33} S₁₆. (voir notamment à ce sujet, W.H. ZACHARIASEN, "Crystal Chemical Studies of the 5f-Series of Elements. The Ce₂S₃-Ce₃S₄ Type of Structure", Acta Cryst. (1949). 2, 57.).

Or, selon l'invention, des éléments alcalins peuvent être introduits dans ces lacunes cationiques, jusqu'à saturation ou non de ces dernières.
La présence de l'élément dopant au sein des compositions selon l'invention peut être mise en évidence par simple analyse chimique. Par ailleurs, les analyses en diffraction X montrent qu'il y a conservation de la phase cristalline en Th₃ P₄ du sesquisulfure, avec dans certains cas une modification plus ou moins importante des paramètres de maille, fonction à la fois de la nature et de la quantité de l'élément dopant introduit.

De façon tout à fait inattendue et surprenante, il s'avère que cette insertion au sein du réseau cristallin du sesquisulfure confère aux compositions selon l'invention des caractéristiques chromatiques nettement améliorées par rapport à tous les sesquisulfures de terres rares connus à ce jour.

En outre, la présence de cet élément dopant peut avoir pour effet bénéfique de stabiliser aux hautes températures la structure cristalline du sesquisulfure considéré, et donc de conserver la couleur désirée dans une plus grande plage de température.

Mais d'autres caractéristiques, aspects et avantages de l'invention apparaîtront encore plus clairement à la lecture de la description qui va suivre, ainsi que des divers exemples destinés à l'illustrer de manière non limitative.

Selon un mode de réalisation préféré des compositions selon l'invention, l'élément dopant est un alcalin et est par exemple choisi, seul ou en mélange, parmi le lithium, le sodium et le potassium.
De manière encore plus préférentielle, l'alcalin est le sodium.

Selon une autre caractéristique de l'invention, la quantité molaire en alcalin(s) dans la composition est au moins égale à 0,1%, et avantageusement comprise entre 5% et 50%, de la quantité molaire en la ou les terres rares présentes dans cette composition.
La nature de la ou des terres rares, ainsi que le type de réseau cristallin du sesquisulfure, sont choisis en fonction de la couleur que l'on désire obtenir pour la composition. Dans tous les cas, on observe que, pour un élément dopant convenablement sélectionné, les compositions selon l'invention présentent des colorations beaucoup plus intenses que celles des sesquisulfures correspondants, non dopés par un élément alcalin par sesquisulfure correspondant, on entend le sesquisulfure contenant la ou les mêmes terres rares et présentant la même forme cristallographique.
Pour un sesquisulfure de terre rare donné, et donc de coloration donnée, l'invention permet ainsi d'accéder, après de simples essais de routine, à toute une gamme de couleurs améliorées, et ceci en jouant simplement sur la nature et/ou la concentration en élément dopant.

On donne ci-après des exemples de couleurs auxquelles il est possible d'aboutir, et ceci à titre purement illustratif et non limitatif :
- les compositions à base de sulfures de cérium ont une couleur variant du brun au rouge selon les conditions de préparation, en particulier, la température de calcination. Ils sont bruns ou rouge sang selon que l'on ait la phase Ce₂S₃ β orthorombique (J.C.P.D.S. 20 269 ) ou la phase Ce₂S₃ γ cubique (J.C.P.D.S. 27 104)
- avec le lanthane, on obtient des composés jaunes correspondant à une structure La₂S₃ cubique (J.C.P.D.S. 25 1041)
- la coloration verte peut être obtenue avec le néodyme, et une coloration vert-jaune avec le praséodyme. Ils présentent respectivement la structure Nd₂S₃ cubique (J.C.P.D.S 26 1450) et
   la structure Pr₂S₃ cubique (J.C.P.D.S. 27 481)
- on dispose d'un composé jaune-marron avec le dysprosium de structure Dy₂S₃ cubique (J.C.P.D.S. 26 594)
- différentes nuances de marron peuvent aussi être obtenues : ocre avec le terbium de structure Tb₂S₃ cubique, brun avec l'erbium de structure Er₂S₃ monoclinique (J.C.P.D.S. 21 324) et beige foncé avec l'yttrium de structure Y₂S₃ monoclinique (J.C.P.D.S. 22 996).
- d'autres exemples de couleurs obtenues sont enfin : brun-gris avec le samarium de structure Sm₂S₃ cubique (J.C.P.D.S. 26 1480), brun-vert avec le gadolinium de structure Gd₂ S₃ γ cubique (J.C.P.D.S. 26 1424), vert-or avec le thulium de structure Tm₂S₃ monoclinique (J.C.P.D.S. 30 1364).

La coloration des compositions selon l'invention peut être quantifiée au moyen des coordonnées chromatiques L*, a* et b* données dans le système CIE 1976 ( L*, a*, b* ) tel que défini par la Commision Internationale d'Eclairage et répertorié dans le Recueil des Normes Françaises (AFNOR), couleur colorimétrique n° X08-12 (1983). Elles sont déterminées au moyen d'un colorimétre commercialisé par la Société Pacific Scientific. La nature de l'illuminant est D65. La surface d'observation est une pastille circulaire de 12,5 cm² de surface. Dans les mesures données, la composante spéculaire est exclue.
L* donne une mesure de la réflectance (nuance clair/sombre) et varie de 100 (blanc) à 0 (noir).

a* et b* sont les valeurs des tendances colorés :
a* positif = rouge
a* négatif = vert
b* positif = jaune
b* négatif = bleu

L* représente donc la variation du noir au blanc, **a*** la variation du rouge au vert et **b*** la variation du jaune au bleu.

Ainsi, à titre d'exemple, quand la terre rare est le cérium et que le sesquisulfure est sous sa forme cristallographique γ cubique, la composition selon l'invention présente les coordonnées chromatiques suivantes :
- L* au moins égale à 30, et notamment comprise entre 30 et 55,
- a* au moins égale à 30, et notamment comprise entre 35 et 65,
- b* compris généralement entre 0 et 35.

Ces coordonnées, et en particulier a*, correspondent à une couleur rouge intense exceptionnelle pour un sulfure de cérium Ce₂S₃ γ cubique, équivalente voire supérieure à celle des pigments rouges de référence, à savoir le sélénure de cadmium et le sulfosélénure de cadium.

Pour cette raison, les compositions de l'invention sont avantageusement utilisées comme pigments pour la coloration de nombreux matériaux tels que, plastiques et peintures, par exemple. Les pigments selon l'invention ne présentent pas les problèmes de toxicité liés à la présence du cadmium dans certains pigments de l'art antérieur.

Comme indiqué précédemment l'invention a également pour objet un procédé de fabrication industriel permettant d'accéder aux nouvelles compositions selon l'invention.

On notera que ce procédé convient particulièrement bien, entre autres, pour accéder à des compositions dans lesquelles le sesquisulfure de terres rares se présente sous une forme cristalline cubique, et notamment γ cubique.

Ce procédé consiste à réaliser un mélange initial contenant au moins un composé de terre rare, du soufre et au moins un composé d'un élément alcalin, à chauffer ledit mélange initial jusqu'à l'obtention de la phase sesquisulfure désirée, sous une atmosphère non oxydante, avantageusement réductrice, puis à refroidir le mélange ainsi traité.

Selon une caractéristique avantageuse et préférée de l'invention, le chauffage du mélange initial est réalisé en présence d'un agent réducteur.

La quantité d'agent réducteur ajouté est déterminée de manière à maintenir une pression partielle d'oxygène très basse dans le réacteur. Ainsi, la quantité de l'agent réducteur est avantageusement suffisante pour consommer l'oxygène libre et/ou combiné contenu dans le mélange initial.

Dans un premier mode de réalisation possible de l'invention, un agent réducteur est ajouté au mélange initial. Cet agent est généralement à base de carbone, tel que, par exemple, le graphite, le coke, la lignite, ou bien encore un composé organique générant du carbone par chauffage. Ce peut être aussi un réducteur métallique, par exemple l'aluminium.

Selon un second mode possible de réalisation, l'agent réducteur est contenu dans le gaz formant l'atmosphère non oxydante. On réalise alors avantageusement un balayage du mélange initial avec un gaz non oxydant, de préférence un gaz inerte, contenant un agent réducteur tel que par exemple l'hydrogène ou le monoxyde de carbone CO. On peut ainsi utiliser un mélange d'hydrogène avec un gaz inerte, tel qu'un mélange argon/hydrogène ou azote/hydrogène, ou bien encore un mélange argon/CO ou azote/CO. Ce balayage peut également être réalisé par de l'hydrogène ou du monoxyde de carbone seuls.

Il peut être avantageux lors de la montée en température, de maintenir le mélange à une température intermédiaire, par exemple comprise entre 250°C et 500°C avant de porter celui-ci à la température correspondant à la formation du sesquisulfure désirée. Ce maintien à une température intermédiaire est réalisé pendant une durée comprise généralement entre 15 mn et 1 heure.

Les composés de terres rares convenables pour l'invention sont, par exemple, choisis dans le groupe comprenant les composés oxycarbonés de terres rares, les sulfates, les oxydes de terres rares.

A titre de composés oxycarbonés de terres rares, on peut citer par exemple les carbonates, oxalates, acétates, malonates, tartrates de terres rares.

Les composés d'alcalins convenables pour l'invention sont, par exemple, choisis dans le groupe comprenant un oxyde, sulfure ou polysulfure, sulfate ou un composé oxycarboné tel qu'un oxalate, carbonate ou acétate d'alcalins. De préférence, on utilise des carbonates.

La quantité d'élément alcalin ajouté est déterminée pour avoir un rapport molaire : élément dopant / terre(s) rare(s) compris généralement entre 0,05 et 0,5, et de préférence entre 0,15 et 0,30, dans le mélange initial.
Par ailleurs, la quantité de soufre présent dans le mélange initial est déterminée pour avoir un rapport molaire : soufre/terre (s) rare(s) supérieur ou égale à 1,5, de préférence supérieur à 2.
Le soufre est introduit sous forme libre (soufre élémentaire solide ou gazeux).
De préférence, on utilise du soufre élémentaire à l'état solide.
Le mélange initial peut bien entendu comprendre plusieurs composés de terres rares et/ou d'alcalins, comme souligné ci-avant.

Le mélange est ensuite chauffé à une température et pendant un temps suffisants pour obtenir la phase sesquisulfure désirée, ce temps étant généralement d'autant plus court que la température est élevée. Cette température dépend bien entendu du sesquisulfure considéré.

Avantageusement, le mélange est chauffé à une température supérieure a 900°C, généralement comprise entre 1000°C et 1400°C, de préférence 1150 - 1300°C, et ceci pendant au moins 30 minutes, de préférence entre 30 mn et 2 heures.

La composition ainsi obtenue peut éventuellement être ensuite soumise a un lavage, par exemple un lavage à l'eau, pour diminuer la teneur en alcalin non liés.

Si nécessaire, la composition obtenue peut enfin être broyée pour obtenir un diamètre moyen de grains compris entre 0,2 µm et 5 µm. Toutefois, selon le procédé de l'invention, on arrive généralement à cette granulométrie sans avoir à broyer le produit, ce qui constitue un avantage très important d'un point de vue économique. Le produit obtenu présente alors des coordonnées chromatiques remarquablement élevées dans la couleur spécifique du sesquisulfure de terre rare considéré.

Des exemples illustrant l'invention vont maintenant être donnés.

### Exemple 1

On réalise ici la préparation d'un sesquisulfure de cérium Ce₂S₃ γ cubique, dopé au sodium.

Dans un mortier, on introduit 58 g d'oxalate de cérium Ce₂ (C₂O₄)₃, 2H₂O ; 48 g de soufre élémentaire ; et 2,65 g de carbonate de sodium anhydre ; le rapport molaire initial Na/Ce est alors de 0,25.
L'ensemble est alors broyé de façon à obtenir un mélange bien homogène.
Ce mélange est ensuite placé dans une nacelle en carbone, laquelle est introduite dans un four tubulaire étanche à l'air. On purge ce four, puis on y réalise un balayage continu d'argon chargé à 10 % d'hydrogène. La température du four est portée à 325°C, à raison de 5°C/min, avec un palier d'une heure à cette température.
Puis la température est portée à 1200°C, toujours à raison de 5°C/min, avec à nouveau un palier d'une heure à cette température.
On revient ensuite à la température ambiante, le refroidissement se faisant à raison de 5°C/min.
Le produit récupéré est ensuite lavé une fois avec de l'eau permutée. Le produit obtenu présente alors une couleur rouge très intense.
L'analyse en diffraction X montre que l'on obtient la seule phase Ce₂S₃ γ cubique, avec un paramètre de maille égal à 8,637 Å.
La teneur en sodium du produit est de 2,8 % en poids (Na/Ce₂S₃).

Ses coordonnées chromatiques sont les suivantes :
L* = 40
a* = 45
b* = 20

Aprés simple désagglomération (broyage peu poussé, type jet d'air) du produit, on obtient une poudre présentant une granulométrie moyenne (0₅₀) de 2,5 µm (mesure par granulométre laser CILAS).

### Exemple 2

On reproduit à l'identique l'exemple 1, à l'exception du fait que l'on utilise 4,24 g de carbonate de sodium anhydre pour préparer le mélange initial, de manière à avoir dans ce dernier un rapport molaire Na/Ce égal à 0,4.

Le produit final obtenu présente les caractéristiques suivantes :
- couleur rouge très intense
- phase Ce₂S₃ γ cubique, avec des traces de NaCeS₂
- paramètre de maille égal à 8,637 Å
- teneur en sodium égale à 4 % en poids (Na/Ce₂S₃)
- coordonnées chromatiques :
   L* = 32
   a* = 40
   b* = 22

### Exemple 3

On réalise ici la préparation d'un sesquisulfure de cérium Ce₂S₃ γ cubique, dopé au potassium.

On reproduit à l'identique l'exemple 1, à l'exception du fait que l'on utilise 4,5 g de carbonate de potassium anhydre pour préparer le mélange initial, de manière à avoir dans ce dernier un rapport molaire K/Ce égal à 0,25.

Le produit final obtenu présente une couleur rouge intense, avec les caractéristiques suivantes :
- phase unique Ce₂S₃ γ cubique
- paramètre de maille égal à 8,696 Å
- teneur en potassium égale à 3,2 % en poids (K/Ce₂S₃)
- coordonnées chromatiques :
   L* = 39
   a* = 39
   b* = 17

### Remarque :

par rapport aux exemples 1 et 2 ci-dessus, on note une dilatation du paramètre de maille de la structure cubique, qui s'explique par le fait que le rayon ionique du potassium est plus grand que celui des lacunes du réseau. A l'inverse, le rayon ionique du sodium étant sensiblement identique à celui des lacunes présentes dans une structure γ cubique, on n'observe pas de modification du paramètre de maille (exemple 1) ; en augmentant les quantités de sodium introduit (exemple 2), on remplit simplement de plus en plus les lacunes, jusqu'à saturation de ces dernières. Ces mesures confirment donc l'insertion des éléments dopants au sein du réseau cristallin des sesquisulfures.

### Exemple 4

On réalise ici la préparation d'un sesquisulfure de lanthane La₂S₃ γ cubique, dopé au potassium.

On prépare un mélange initial constitué de :
- 59 g d'oxalate de lanthane La₂(Ce₂O₄)₃, 2H₂O
- 48 g de soufre élémentaire
- 4,24 g de carbonate de potassium anhydre

On procède ensuite comme l'exemple 1.

Le produit final obtenu présente une couleur jaune.

Son analyse par diffraction X montre que l'on obtient essentiellement la phase La₂S₃ γ cubique, avec des traces de KLaS₂.

Sa teneur en potassium est de 4 % en poids (K/La₂S₃).

Ses coordonnées chromatiques sont les suivantes :
L* = 80
a* = - 3
b* = 46

### Exemple 5 comparatif

On a reproduit l'exemple 1 de la demande de brevet EP-A- 0203838. On a obtenu un sesquisulfure de cérium Ce₂S₃ γ cubique, de couleur rouge, présentant les coordonnées chromatiques suivantes :
L* = 35
a* = 30
b* = 14

### Exemple 6 comparatif

On a reproduit l'exemple 3 de la demande de brevet EP-A- 0203838.

On a obtenu un sesquisulfure de lanthane La₂S₃ γ cubique, de couleur jaune, présentant les coordonnées chromatiques suivantes :
L* = 70
a* = - 5
b* = 39

## Revendications

1. Composition à base d'au moins un sesquisulfure de terre rare de formule M₂S₃ et à structure lacunaire dans laquelle M représente au moins un élément pris dans le groupe constitué par les lanthanides et l'yttrium, caractérisée en ce qu'elle contient au moins un élément alcalin (élément dopant) dont une partie au moins est incluse dans le réseau cristallin dudit sulfure et peut être présente dans les lacunes cationiques de ce réseau, et en ce que le sesquisulfure est cristallisé selon une structure cristallographique du type Th₃P₄ essentiellement.

2. Composition selon la revendication 1, caractérisée en ce qu'elle se présente sous forme d'une poudre de granulométrie moyenne comprise entre 0,2 et 5µm.

3. Composition selon la revendication 1 ou 2, caractérisée en ce qu'elle se présente sous forme d'une poudre non broyée ou d'une poudre désagglomérée.

4. Composition selon l'une quelconque des revendications précédentes, caractérisée en ce que la quantité molaire en élément dopant représente au moins 0,1% de la quantité molaire en élément M.

5. Composition selon la revendication 4, caractérisée en ce que la quantité molaire en élément dopant est comprise entre 5 et 50% de la quantité molaire en élément M.

6. Composition selon l'une des revendications précédentes, caractérisée en ce que ledit élément dopant est le sodium.

7. Composition selon l'une quelconque des revendications précédentes, caractérisée en ce que ledit sesquisulfure de terre rare est le sesquisulfure de cérium Ce₂S₃ γ cubique.

8. Composition selon la revendication 7, caractérisée en ce qu'elle présente les coordonnées chromatiques suivantes :
L* au moins égal à 30 et plus particulièrement compris entre 30 et 55,
a* au moins égal à 30 et plus particulièrement compris entre 35 et 65,
b* compris entre 0 et 35.

9. Procédé de préparation d'une composition telle que définie à l'une quelconque des revendications 1 à 8, caractérisé en ce qu'il consiste à réaliser un mélange initial contenant au moins un composé de terre rare, du soufre et au moins un composé d'un élément dopant, à chauffer ledit mélange initial sous une atmosphère non oxydante jusqu'à l'obtention de la phase sesquisulfure désirée, puis à refroidir le mélange ainsi traité.

10. Procédé selon la revendication 9, caractérisé en ce que ledit chauffage est réalisé en présence d'un agent réducteur.

11. Procédé selon la revendication 10, caractérisé en ce que l'agent réducteur est ajouté au mélange initial.

12. Procédé selon la revendication 11, caractérisé en ce que l'agent réducteur est à base de carbone ou est capable de générer du carbone par chauffage.

13. Procédé selon la revendication 10, caractérisé en ce que l'agent réducteur est contenu dans, ou constitue complètement, le gaz formant l'atmosphère non oxydante.

14. Procédé selon la revendication 13, caractérisé en ce que l'agent réducteur est l'hydrogène et/ou le monoxyde de carbone.

15. Procédé selon l'une quelconque des revendications 9 à 14, caractérisé en ce que ledit composé de terre rare est choisi dans le groupe comprenant les composés oxycarbonés de terres rares, les sulfates de terres rares et les oxydes de terres rares.

16. Procédé selon la revendication 15, caractérisé en ce que ledit composé oxycarboné de terres rares est choisi dans le groupe comprenant les carbonates, les acétates, les oxalates, les tartrates et les malonates.

17. Procédé selon l'une quelconque des revendications 9 à 16, caractérisé en ce que le composé de l'élément dopant est choisi dans le groupe comprenant les oxydes, les sulfures, les polysulfures, les sulfates et les composés oxycarbonés.

18. Procédé selon la revendication 17, caractérisé en ce que les composés oxycarbonés sont choisis dans le groupe comprenant les carbonates, les oxalates et les acétates, les carbonates étant préférés.

19. Procédé selon l'une quelconque des revendications 9 à 18, caractérisé en ce que le rapport molaire entre l'élément dopant et l'élément terre rare dans le mélange initial est compris entre 0,05 et 0,5, et de préférence entre 0,15 et 0,30.

20. Procédé selon l'une quelconque des revendications 9 à 19, caractérisé en ce que le rapport molaire entre le soufre total et l'élément terre rare dans le mélange initial est supérieur ou égal à 1,5, et de préférence supérieur à 2.

21. Procédé selon l'une quelconque des revendications 9 à 20, caractérisé en ce que la température de chauffage est supérieure à 900°C.

22. Procédé selon l'une quelconque des revendications 9 à 21, caractérisé en ce que, après refroidissement, la composition est soumise à un lavage.

23. Procédé selon l'une quelconque des revendications 9 à 22, caractérisé en ce que, après refroidissement et éventuellement lavage, la composition est soumise à une désagglomération.

24. Pigments de coloration, caractérisés en ce qu'ils comprennent une composition telle que définie à l'une quelconque des revendications 1 à 8, ou susceptible d'être obtenue selon un procédé tel que défini à l'une quelconque des revendications 9 à 23.

25. Utilisation des pigments de coloration selon la revendication 24 dans les matières plastiques, les peintures , les lasures, les caoutchoucs, les papiers, les encres, les produits cosmétiques, les teintures et les revêtements stratifiés.

## Claims

1. A composition based on at least one sesquisulphide of a rare earth with formula M₂S₃ and with a lacunary structure, in which M represents at least one element from the group constituted by lanthanides and yttrium, characterized in that it contains at least one alkaline element (doping element), at least a portion of which is included in the crystalline lattice of said sulphide and which may be present in the cationic voids of that lattice, and in that the sesquisulphide is essentially crystallised in the Th₃P₄ type crystallographic structure.

2. A composition according to claim 1, characterized in that it is in the form of a powder with an average granulometry which is in the range 0.2 µm to 5 µm.

3. A composition according to claim 1 or claim 2, characterized in that it is in the form of a powder which is not ground or a de-agglomerated powder.

4. A composition according to any one of the preceding claims, characterized in that the molar quantity of the doping element is at least 0.1% of the molar quantity of element M.

5. A composition according to claim 4, characterized in that the molar quantity of the doping element is in the range 5% to 50% of the molar quantity of element M.

6. A composition according to any one of the preceding claims, characterized in that said doping element is sodium.

7. A composition according to any one of the preceding claims, characterized in that said rare earth sesquisulphide is Ce₂S₃ γ cubic cerium sesquisulphide.

8. A composition according to claim 7, characterized in that it has the following chromatic coordinates:
L* is at least 30, more particularly in the range 30 to 55;
a* is at least 30, more particularly in the range 35 to 65;
b* is in the range 0 to 35.

9. A process for the preparation of a composition as defined in any one of claims 1 to 8, characterized in that it consists of forming an initial mixture containing at least one rare earth compound, sulphur and at least one doping element compound, heating said initial mixture in a non oxidising atmosphere to obtain the desired sesquisulphide phase, then cooling the treated mixture.

10. A process according to claim 9, characterized in that said heating is carried out in the presence of a reducing agent.

11. A process according to claim 10, characterized in that the reducing agent is added to the initial mixture.

12. A process according to claim 11, characterized in that the reducing agent is carbon based or can generate carbon on heating.

13. A process according to claim 10, characterized in that the reducing agent is contained in or completely constitutes the gas forming the non oxidising atmosphere.

14. A process according to claim 13, characterized in that the reducing agent is hydrogen and/or carbon monoxide.

15. A process according to any one of claims 9 to 14, characterized in that said rare earth compound is selected from the group comprising oxycarbonated rare earth compounds, rare earth sulphates and rare earth oxides.

16. A process according to claim 15, characterized in that said oxycarbonated rare earth compound is selected from the group comprising carbonates, acetates, oxalates, tartrates and malonates.

17. A process according to any one of claims 9 to 16, characterized in that the doping element compound is selected from the group comprising oxides, sulphides, polysulphides, sulphates and oxycarbonated compounds.

18. A process according to claim 17, characterized in that the oxycarbonated compounds are selected from the group comprising carbonates, oxalates and acetates, carbonates being preferred.

19. A process according to any one of claims 9 to 18, characterized in that the molar ratio between the doping element and the rare earth element in the initial mixture is in the range 0.05 to 0.5, preferably in the range 0.15 to 0.30.

20. A process according to any one of claims 9 to 19, characterized in that the molar ratio between the total sulphur and the rare earth element in the initial mixture is greater than or equal to 1.5, preferably greater than 2.

21. A process according to any one of claims 9 to 20, characterized in that the heating temperature is over 900°C.

22. A process according to any one of claims 9 to 21, characterized in that the composition is washed after cooling.

23. A process according to any one of claims 9 to 22, characterized in that the composition is de-agglomerated after cooling and optional washing.

24. Colouring pigments, characterized in that they comprise a composition as defined in any one of claims 1 to 8, or they can be obtained using a process as defined in any one of claims 9 to 23.

25. Use of colouring pigments according to claim 24 in plastics, paints, finishes, rubbers, paper, inks, cosmetics, dyes and laminated coatings.

## Patentansprüche

1. Zusammensetzung auf Basis mindestens eines Sesquisulfids einer Seltenen Erde mit der Formel M₂S₃ und mit einer Fehl- oder Leerstellen aufweisenden Struktur, wobei M mindestens ein aus der Gruppe von Lanthaniden und Yttrium ausgewähltes Element darstellt, dadurch gekennzeichnet, daß sie mindestens ein Alkalielement (Dotierelement) enthält, von dem mindestens ein Teil in dem Kristallgitter des Sulfids eingelagert ist und in den kationischen Feld- oder Leerstellen dieses Gitters befindlich sein kann, und daß das Sesquisulfid gemäß einer Kristallstruktur im wesentlichen vom Th₃P₄-Typ kristallisiert ist.

2. Zusammensetzung nach Anspruch 1, dadurch gekennzeichnet, daß sie in Form eines Pulvers mit einer mittleren Teilchengröße zwischen 0,2 und 5 µm vorliegt.

3. Zusammensetzung nach Anspruch 1 oder 2, dadurch gekennzeichnet, daß sie in Form eines nicht vermahlenen Pulvers oder in Form eines entagglomerierten Pulvers vorliegt.

4. Zusammensetzung nach einen, der vorhergehenden Ansprüche, dadurch gekennzeichnet, daß die molare Menge an Dotierelement mindestens 0,1 % der molaren Menge an Element M darstellt.

5. Zusammensetzung nach Anspruch 4, dadurch gekennzeichnet, daß die molare Menge an Dotierelement zwischen 5 und 50 % der molaren Menge an Element M beträgt.

6. Zusammensetzung nach einem der vorhergehenden Ansprüche, dadurch gekennzeichnet, daß das Dotierelement Natrium ist.

7. Zusammensetzung nach einen, der vorhergehenden Ansprüche, dadurch gekennzeichnet, daß das Sesquisulfid der Seltenen Erde das γ-kubische Cersesquisulfid Ce₂S₃ ist.

8. Verfahren nach Anspruch 7, dadurch gekennzeichnet, daß sie die folgenden Farbwerte aufweist:
L* mindestens gleich 30, insbesondere zwischen 30 und 55;
a* mindestens gleich 30, insbesondere zwischen 35 und 65;
b* zwischen 0 und 35.

9. Verfahren zur Herstellung einer Zusammensetzung gemäß einem der Ansprüche 1 bis 8, dadurch gekennzeichnet, daß man eine anfängliche Mischung, die mindestens eine Verbindung einer Seltenen Erde, Schwefel und mindestens eine Verbindung eines Dotierelements enthält, herstellt, diese anfängliche Mischung unter nichtoxidierender Atmosphäre erhitzt, bis man die gewünschte Sesquisulfidphase erhält, und dann die so behandelte Mischung abkühlt.

10. Verfahren nach Anspruch 9, dadurch gekennzeichnet, daß das Aufheizen in Gegenwart eines Reduktionsmittels durchgeführt wird.

11. Verfahren nach Anspruch 10, dadurch gekennzeichnet, daß das Reduktionsmittel zu der Anfangsmischung hinzugegeben wird.

12. Verfahren nach Anspruch 11, dadurch gekennzeichnet, daß das Reduktionsmittel auf Basis von Kohlenstoff vorliegt oder durch Erhitzen Kohlenstoff freisetzen kann.

13. Verfahren nach Anspruch 10, dadurch gekennzeichnet, daß das Reduktionsmittel in dem die nichtoxidierende Atmosphäre bildenden Gas enthalten ist oder vollständig aus diesem besteht.

14. Verfahren nach Anspruch 13, dadurch gekennzeichnet, daß das Reduktionsmittel Wasserstoff und/oder Kohlenstoffmonoxid ist.

15. Verfahren nach einem der Ansprüche 9 bis 14, dadurch gekennzeichnet, daß die Verbindung der Seltenen Erden ausgewählt ist aus der Gruppe von oxycarbonierten Verbindungen der Seltenen Erden, Sulfaten der Seltenen Erden und Oxiden der Seltenen Erden.

16. Verfahren nach Anspruch 15, dadurch gekennzeichnet, daß die oxycarbonierte Verbindung der Seltenen Erden ausgewählt ist aus der Gruppe von Carbonaten, Acetaten, Oxalaten, Tartraten und Malonaten.

17. Verfahren nach einem der Ansprüche 9 bis 16, dadurch gekennzeichnet, daß die Verbindung des Dotierelements ausgewählt ist aus der Gruppe von Oxiden, Sulfiden, Polysulfiden, Sulfaten und oxycarbonierten Verbindungen.

18. Verfahren nach Anspruch 17, dadurch gekennzeichnet, daß die oxycarbonierten Verbindungen ausgewählt sind aus der Gruppe von Carbonaten, Oxalaten und Acetaten, wobei die Carbonate bevorzugt sind.

19. Verfahren nach einem der Ansprüche 9 bis 18, dadurch gekennzeichnet, daß das Molverhältnis zwischen dem Dotierelement und dem Element der Seltenen Erde in der anfänglichen Mischung zwischen 0,05 und 0,5, vorzugsweise zwischen 0,15 und 0,30, liegt.

20. Verfahren nach einem der Ansprüche 9 bis 19, dadurch gekennzeichnet, daß das Molverhältnis zwischen dem Gesamtschwefel und der Seltenen Erde in der anfänglichen Mischung größer oder gleich 1,5, vorzugsweise größer als 2, ist.

21. Verfahren nach einem der Ansprüche 9 bis 20, dadurch gekennzeichnet, daµ die Aufheiztemperatur größer als 900 °C ist.

22. Verfahren nach einem der Ansprüche 9 bis 21, dadurch gekennzeichnet, daß nach der Abkühlung die Zusammensetzung einem Waschschritt unterzogen wird.

23. Verfahren nach einem der Ansprüche 9 bis 22, dadurch gekennzeichnet, daß nach der Abkühlung und gegebenenfalls nach dem Waschschritt die Zusammensetzung einer Entagglomeration unterworfen wird.

24. Farbpigmente, dadurch gekennzeichnet, daß sie eine Zusammensetzung enthalten, wie sie in einem der Ansprüche 1 bis 8 definiert ist oder wie sie gemäß einem Verfahren nach einem der Ansprüche 9 bis 23 erhalten werden kann.

25. Verwendung von Farbpigmenten gemäß Anspruch 24 in Plastikmaterialien, Anstrichfarben, Lasuren, Kautschuken, Papieren, Druckfarben, kosmetischen Produkten, Färbemitteln und Schichtüberzügen.
